# FASCICULE DE BREVET EUROPEEN

(11) **EP 3 604 137 B1**
(45) Date de publication et mention de la délivrance du brevet: **30.09.2020**
(21) Numéro de dépôt: 19170360.2
(22) Date de dépôt: 19.04.2019
(51) Int. Cl.: B64D 27/26

(54) **ENSEMBLE POUR UN AERONEF, L'ENSEMBLE COMPORTANT UN MAT ET UNE ATTACHE MOTEUR AVANT**
EINHEIT FÜR EIN LUFTFAHRZEUG, DIE EINEN MAST UND EINE VORDERE MOTORBEFESTIGUNG UMFASST
ASSEMBLY FOR AN AIRCRAFT, THE ASSEMBLY COMPRISING A MAST AND A FRONT ENGINE ATTACHMENT

(30) Priorité: 30.07.2018 FR 1857073
(43) Date de publication de la demande: 05.02.2020
(73) Titulaire: Airbus Operations S.A.S., 31060 Toulouse (FR)
(72) Inventeur: DEFORET, Thomas, 31060 TOULOUSE cedex 9 (FR); PUECH, Jacky, 31060 TOULOUSE Cedex 9 (FR)
(74) Mandataire: Gicquel, Olivier Yves Gérard

(56) Documents cités:
- EP-A1- 2 848 535
- FR-A1- 2 974 065
- FR-A1- 3 059 982
- GB-A- 2 013 786
- US-A1- 2018 186 462

## Description

La présente invention concerne un ensemble pour un aéronef qui comporte un mât et une attache moteur avant, un ensemble de motorisation d'un aéronef comportant un tel ensemble, ainsi qu'un aéronef comportant au moins un tel ensemble de motorisation.

Un aéronef comporte classiquement une aile sous laquelle est fixé un mât auquel est fixé un moteur. Le moteur est fixé au mât via un système d'attaches constitué, entre autres, à l'avant par une attache moteur avant et à l'arrière par une attache moteur arrière.

Dans le cas où l'attache moteur avant se positionne contre un front avant du mât, la fixation est assurée par des boulons de traction et des pions de cisaillement sont perpendiculaires audit front avant, c'est-à-dire globalement horizontaux.

Le moteur est d'abord fixé à l'attache moteur avant et du fait de sa structure, il gêne l'accès à la face avant de l'attache moteur avant.

La mise en position de l'attache moteur avant contre le front avant du mât s'effectue ensuite par un hissage vertical. Lorsque l'attache moteur avant est en position, les pions de cisaillement et les boulons de traction sont mis en place.

Du fait de l'accès difficile à la face avant de l'attache moteur avant, il est difficile de mettre en position les pions de cisaillement et les boulons de traction.

La demande de brevet FR2974065 décrit toutes les caractéristiques du préambule de la revendication 1.

Un objet de la présente invention est de proposer un ensemble pour un aéronef qui comporte un mât et une attache moteur avant qui comporte des moyens pour faciliter la mise en place et la fixation du pion de cisaillement.

A cet effet, est proposé un ensemble pour un aéronef tel que revendiqué dans la revendication 1.

Un tel système d'assemblage peut donc être mis en place depuis un seul côté même si l'autre côté est inaccessible.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant au moins un ensemble selon l'invention,
la Fig. 2 est une vue en perspective d'un ensemble selon l'invention avant assemblage,
la Fig. 3 est une vue en perspective et en vue éclatée d'un système de fixation selon l'invention,
la Fig. 4 est une vue en coupe de l'ensemble selon l'invention en position assemblée, et

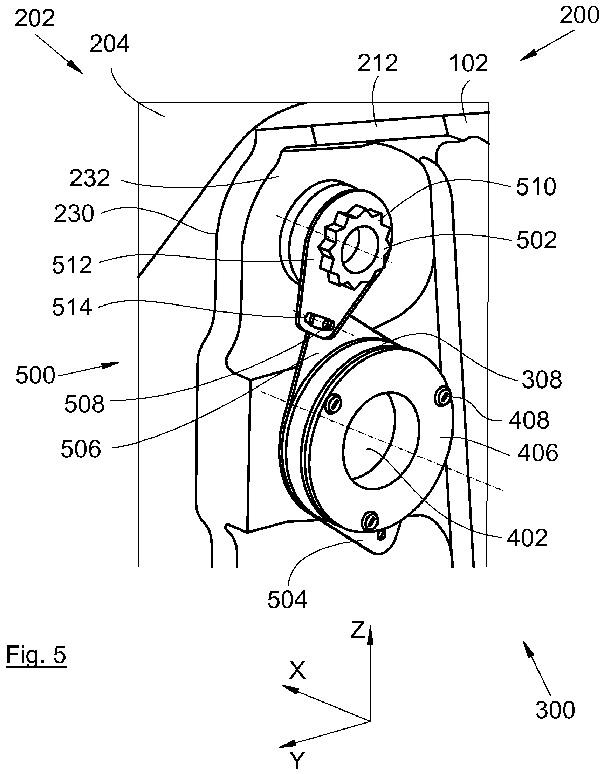

la Fig. 5 est une vue en perspective de l'ensemble en position assemblée.

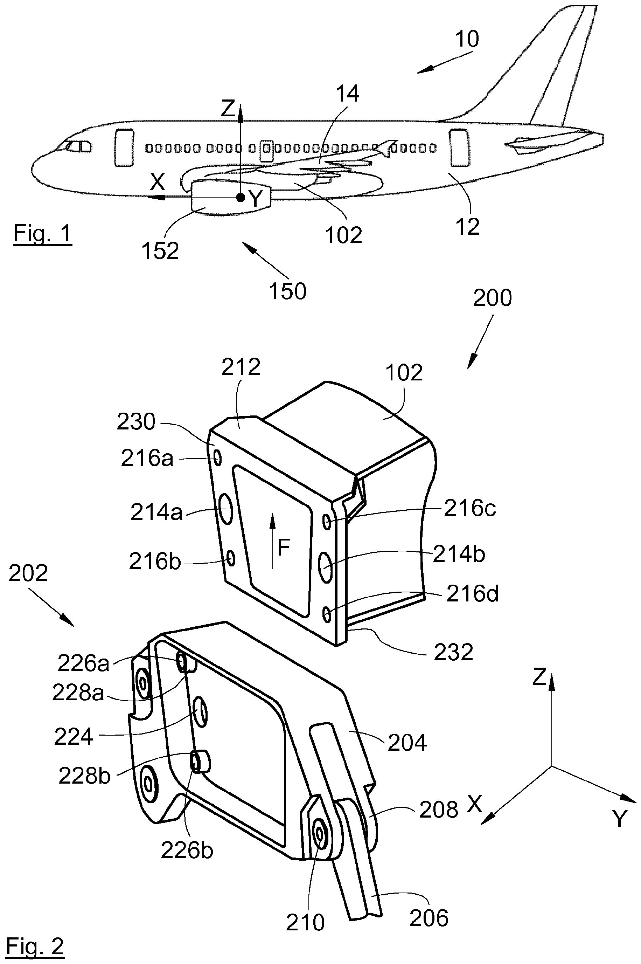

Dans la description qui suit, les termes relatifs à une position sont pris en référence à un aéronef en position d'avancement normal, c'est-à-dire comme il est représenté sur la Fig. 1.

La Fig. 1 montre un aéronef 10 qui comporte un fuselage 12 présentant une aile 14 de chaque côté.

Sous chaque aile 14 est fixé un mât 102 et un moteur 150 fixé au mât 102. Le moteur 150 est, par exemple, un turbomoteur et il comprend entre autres un carter structural (« structural casing » en terminologie anglo-saxonne) qui est fixé au mât 102 et une nacelle 152 qui constitue le carénage aérodynamique du moteur 150 et qui est fixée à la fois au carter structural et au mât 102.

Dans toute la description qui va suivre, et par convention, la direction X correspond à la direction longitudinale du moteur 150, cette direction étant parallèle à l'axe longitudinal du moteur 150. D'autre part, la direction Y correspond à la direction orientée transversalement par rapport au moteur 150, et la direction Z correspond à la direction verticale ou hauteur, ces trois directions X, Y, Z étant orthogonales entre elles.

La Fig. 2 montre un ensemble 200 qui comporte le mât 102 et une attache moteur avant 202. Pour des raisons de simplification, le carter structural n'est pas représenté, mais il est fixé à l'attache moteur avant 202 et présente une partie qui vient se placer à l'avant de l'attache moteur avant 202 et en gêne l'accès.

L'attache moteur avant 202 qui se fixe donc entre le mât 102 et le carter structural comporte une poutre 204 fixée au mât 102 et deux plaques d'accouplement 206 (une seule est vue sur la Fig. 2) disposées de part et d'autre d'un plan médian XZ du moteur 150. Chaque plaque d'accouplement 206 est fixée entre la poutre 204 et le carter structural.

Pour chaque plaque d'accouplement 206, la poutre 204 et le carter structural présentent une chape 208 dans laquelle s'insère une extrémité de ladite plaque d'accouplement 206 qui est fixée par la mise en place d'un système de fixation 210 du type vis-écrou.

Le front avant du mât 102 présente une plaque de fixation 212 globalement verticale et présentant une face avant 230 orientée vers l'avant et une face arrière 232 orientée vers l'arrière.

La plaque de fixation 212 est traversée entre la face avant 230 et la face arrière 232 par au moins un alésage central 214a-b.

Dans le mode de réalisation de l'invention présenté ici, il y a deux alésages centraux 214a-b. L'axe de chaque alésage central 214a-b est globalement horizontal et parallèle à la direction longitudinale X.

Chaque alésage central 214a-b est prévu pour recevoir un pion de cisaillement.

Pour chaque alésage central 214a-b, la poutre 204 comporte un alésage central complémentaire 224 qui s'aligne avec l'alésage central 214a-b correspondant.

La mise en place de la poutre 204 contre la plaque de fixation 212 s'effectue par un hissage vertical F jusqu'à aligner chaque alésage central complémentaire 224 avec l'alésage central 214a-b correspondant de la plaque de fixation 212. Lors de la mise en place, la face avant 230 se positionne contre une face arrière de la poutre 204.

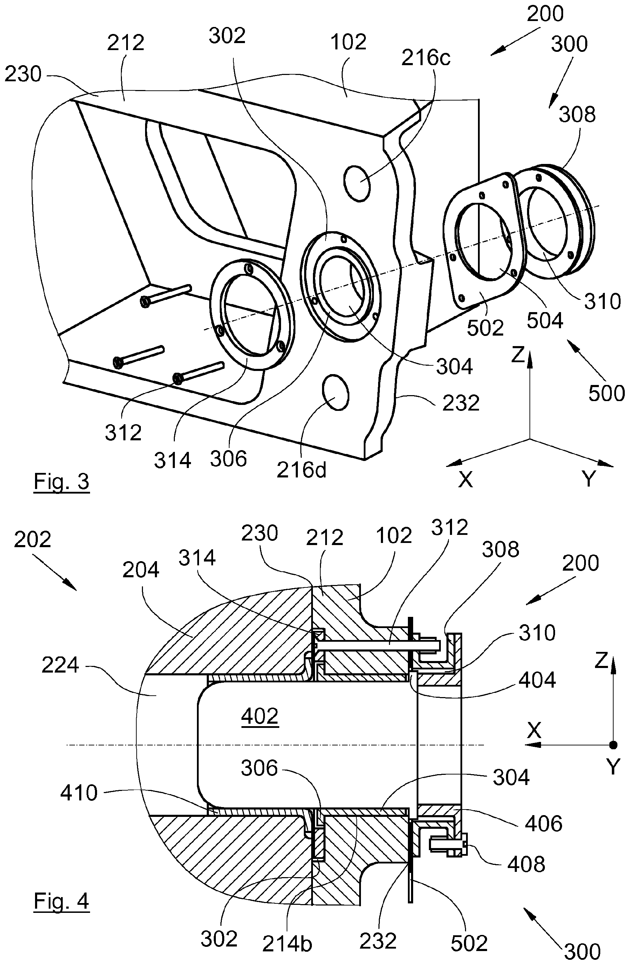

La Fig. 3 et la Fig. 4 montrent un système de fixation 300 qui est mis en place pour chaque alésage central 214a-b.

Le système de fixation 300 comporte un pion de cisaillement 402 qui présente une collerette 404. Le pion de cisaillement 402 s'introduit à l'intérieur de l'alésage central 214a-b et de l'alésage central complémentaire 224 correspondant depuis la face arrière 232 de la plaque de fixation 212 et sa collerette 404 vient en appui contre la face arrière 232 de la plaque de fixation 212. La longueur du pion de cisaillement 402 est suffisante pour être à la fois dans l'alésage central 214b et l'alésage central complémentaire 224 correspondant de la poutre 204.

Le système de fixation 300 comporte un support 308 avec un trou central 310 dont le diamètre est supérieur au diamètre de la collerette 404. Le support 308 se fixe à la face arrière 232 de la plaque de fixation 212 de manière à aligner le trou central 310 et l'alésage central 214b. La fixation du support 308 est réalisée ici par trois vis 312 qui se vissent dans des écrous solidaires du support 308 en traversant la plaque de fixation 212 de la face avant 230 à la face arrière 232 à travers des perçages prévus à cet effet. Ce mode de fixation ne nécessite pas de tarauder les perçages, mais tout autre mode de fixation est également possible, par exemple en taraudant les perçages et en vissant les vis 312 depuis la face arrière 232.

Le système de fixation 300 comporte un capuchon 406 qui se fixe de manière amovible au support 308 et obture le trou central 310 et vient en appui contre le pion de cisaillement 402.

La fixation du capuchon 406 est assurée ici par des vis 408 qui se vissent du côté de la face arrière 232 dans des écrous solidaires du support 308.

La mise en place du système de fixation 300 consiste à fixer le support 308 à la face arrière 232. Une fois que la poutre 204 est en face de la plaque de fixation 212, le pion de cisaillement 402 est mis en place depuis la face arrière 232, et enfin, le capuchon 406 est fixé au support 308 depuis la face arrière 232.

Ainsi, après que la poutre 204 soit positionnée, il n'est pas nécessaire d'avoir accès à l'avant de la poutre 204 pour fixer le pion de cisaillement 402.

Dans le mode de réalisation de l'invention présenté ici, le système de fixation 300 comporte une bague antifriction 304 qui loge dans l'alésage central 214b. Le pion de cisaillement 402 est alors emmanché dans la bague antifriction 304.

La plaque de fixation 212 présente au niveau de sa face avant 230 autour de l'alésage central 214b, un évidement 302 et dans le mode de réalisation de l'invention présenté ici, la bague antifriction 304 présente une collerette 306 qui se positionne dans l'évidement 302. La bague antifriction 304 est ainsi mise en place ici depuis la face avant 230.

Il est également possible de prévoir que l'évidement se situe du côté de la face arrière 232 et que la bague antifriction 304 est ainsi mise en place ici depuis la face arrière 232.

Dans le mode de réalisation de l'invention présenté ici, la plaque de fixation 212 présente également quatre alésages périphériques 216a-d. L'axe de chaque alésage périphérique 216a-d est globalement horizontal et parallèle à la direction longitudinale X. La plaque de fixation 212 présente ici de part et d'autre du plan médian XZ un alésage central 214a-b et deux alésages périphériques 216a-d, où un alésage périphérique 216a, 216c est disposé au-dessus de l'alésage central 214a-b et où un alésage périphérique 216b, 216d est disposé au-dessous de l'alésage central 214a-b. Bien sûr, le nombre d'alésages centraux 214a-b et d'alésages périphériques 216a-d peut être différent.

Chaque alésage périphérique 216a-d est prévu pour recevoir un boulon de traction 502 et débouche sur la face avant 230 et la face arrière 232.

Pour chaque alésage périphérique 216a-d, la poutre 204 comporte un alésage périphérique complémentaire 226a-b qui s'aligne avec l'alésage périphérique 216a-d correspondant.

Pour chaque alésage périphérique 216a-d, la poutre 204 comporte un écrou 228a-b qui est fixé au niveau de l'alésage périphérique complémentaire 226a-b correspondant pour permettre le vissage d'un boulon de traction 502 du système de fixation 300.

Lors de la mise en place de la poutre 204 contre la plaque de fixation 212, chaque alésage 216a-d s'aligne avec l'alésage périphérique complémentaire 226a-b correspondant.

Les boulons de traction 502 sont également mis en place depuis la face arrière 232 de la plaque de fixation 212 et se vissent dans les écrous 228a-b de la poutre 204 prévus à cet effet et en traversant l'alésage périphérique 216a-d et l'alésage périphérique complémentaire 226a-b.

La plaque de fixation 212 déborde sur les côtés du corps du mât 102 pour que les alésages centraux 214a-b et les alésages périphériques 216a-d soient accessibles depuis la face arrière 232.

Dans le mode de réalisation de l'invention présenté ici, le système de fixation 300 comporte une bague additionnelle antifriction 410 qui loge dans l'alésage central complémentaire 224 de la poutre 204 qui s'aligne avec l'alésage central 214b de la plaque de fixation 212. La bague additionnelle antifriction 410 présente une collerette qui se positionne dans un évidement que la poutre 204 présente au niveau de sa face arrière autour de l'alésage complémentaire 224. Le pion de cisaillement 402 est alors emmanché dans la bague additionnelle antifriction 410.

Le système de fixation 300 comporte également, pour chaque boulon de traction 502, un système anti-rotation 500 qui empêche la rotation du boulon de traction 502.

Le système anti-rotation 500 comporte une plaque de fixation 504 qui est fixée entre la face arrière 232 de la plaque de fixation 212 et le support 308. La plaque de fixation 504 présente une fenêtre 504 alignée avec l'alésage central 214b et dont le diamètre est supérieur au diamètre de la collerette 404 du pion de cisaillement 402 pour permettre sa mise en place de ce dernier depuis la face arrière 232.

Dans le mode de réalisation de l'invention présenté ici, la plaque de fixation 504 présente des trous pour le passage des vis 312.

Pour chaque boulon de traction 502 voisin de la plaque de fixation 504, celle-ci présente une aile 506 qui s'étend vers ledit boulon de traction 502 et qui est percée d'un trou de blocage 508.

La tête de chaque boulon de traction 502 présente une empreinte 510 et le système anti-rotation 500 comporte une plaque de blocage 512 qui présente une contre-empreinte où l'empreinte 510 et la contre-empreinte coopèrent pour bloquer la rotation de la plaque de blocage 512 autour de l'axe du boulon de traction 502.

Dans le mode de réalisation de l'invention présenté ici, l'empreinte 510 est une empreinte mâle en étoile et la contre-empreinte est une empreinte femelle en étoile.

La plaque de blocage 512 présente une fenêtre de blocage 514, ici de forme oblongue qui s'aligne avec le trou de blocage 508.

Le système anti-rotation 500 comporte également une goupille qui se positionne et se fixe dans la fenêtre de blocage 514 et le trou de blocage 508 pour empêcher la rotation de la plaque de blocage 512 et donc du boulon de traction 502.

Dans le mode de réalisation de l'invention présenté sur les Figs. 3 et 4, le système de fixation 300 comporte également une couronne 314 qui se positionne dans le fond de l'évidement 302 et qui comporte des trous fraisés pour y loger les têtes des vis 312.

Ainsi pour l'aéronef 10, un ensemble de motorisation selon l'invention comporte le moteur 150, l'ensemble 100 avec le mât 102 et l'attache moteur avant 202.

## Revendications

1. Ensemble (200) pour un aéronef (10) et comportant :
- un mât (102) présentant une plaque de fixation (212) présentant une face avant (230) et une face arrière (232) et traversée entre la face avant (230) et la face arrière (232) par au moins un alésage central (214a-b),
- une attache moteur avant (202) comportant une poutre (204) qui présente une face arrière en appui contre la face avant (230) de la plaque de fixation (212) et, qui pour chaque alésage central (214a-b), présente un alésage central complémentaire (224) aligné avec ledit alésage central (214a-b), et
l'ensemble (200) étant **caractérisé en ce que** pour chaque alésage central (214a-b), ledit ensemble (200) comprend un système de fixation (300) qui comporte :
- un pion de cisaillement (402) qui est introduit dans l'alésage central (214b) et l'alésage central complémentaire (224) correspondant depuis la face arrière (232) de la plaque de fixation (212) et qui présente une collerette (404) en appui contre la face arrière (232) de la plaque de fixation (212),
- un support (308) avec un trou central (310) dont le diamètre est supérieur au diamètre de la collerette (404) et fixé à la face arrière (232) de la plaque de fixation (212) de manière à aligner le trou central (310) et l'alésage central (214b), et
- un capuchon (406) fixé au support (308), obturant le trou central (310) et étant en appui contre le pion de cisaillement (402).

2. Ensemble (200) selon la revendication 1, **caractérisé en ce que** la plaque de fixation (212) est traversée entre la face avant (230) et la face arrière (232) par au moins un alésage périphérique (216a-d), **en ce que** pour chaque alésage périphérique (216a-d), la poutre (204) présente un alésage périphérique complémentaire (226a-b) aligné avec ledit alésage périphérique (216a-d) et un écrou (228a-b) fixé au niveau de l'alésage périphérique complémentaire (226a-b), et **en ce que** le système de fixation (300) comporte pour chaque alésage périphérique (216a-d), un boulon de traction (502) qui se visse à l'écrou (228a-b) depuis la face arrière (232) de la plaque de fixation (212) en traversant l'alésage périphérique (216a-d) et l'alésage périphérique complémentaire (226a-b).

3. Ensemble (200) selon la revendication 2, **caractérisé en ce que** la tête de chaque boulon de traction (502) présente une empreinte (510), **en ce que** ledit ensemble (200) comporte un système anti-rotation (500) qui comporte :
- une plaque de fixation (504) fixée entre la face arrière (232) de la plaque de fixation (212) et le support (308), présentant une fenêtre (504) alignée avec l'alésage central (214b) et dont le diamètre est supérieur au diamètre de la collerette (404) du pion de cisaillement (402), et présentant une aile (506) percée d'un trou de blocage (508),
- une plaque de blocage (512) présentant une contre-empreinte où l'empreinte (510) et la contre-empreinte coopèrent pour bloquer la rotation de la plaque de blocage (512) autour de l'axe du boulon de traction (502) et une fenêtre de blocage (514) alignée avec le trou de blocage (508), et
- une goupille qui se fixe dans la fenêtre de blocage (514) et le trou de blocage (508).

4. Ensemble de motorisation d'un aéronef (10) comportant un moteur (150) et un ensemble (100) selon l'une des revendications précédentes.

5. Aéronef (10) comportant au moins un ensemble de motorisation selon la revendication précédente.

## Patentansprüche

1. Einheit (200) für ein Luftfahrzeug (10), die Folgendes umfasst:
- einen Mast (102), der eine Befestigungsplatte (212) aufweist, die eine Vorderseite (230) und eine Hinterseite (232) aufweist und zwischen der Vorderseite (230) und der Hinterseite (232) von mindestens einer zentralen Bohrung (214a-b) durchquert wird,
- eine vordere Motorbefestigung (202), die einen Träger (204) umfasst, der eine an der Vorderseite (230) der Befestigungsplatte (212) anliegende Hinterseite aufweist und der für jede zentrale Bohrung (214a-b) eine komplementäre zentrale Bohrung (224), die zu der zentralen Bohrung (214a-b) ausgerichtet ist, aufweist, und
wobei die Einheit (200) **dadurch gekennzeichnet ist, dass** die Einheit (200) für jede zentrale Bohrung (214a-b) ein Befestigungssystem (300) beinhaltet, das Folgendes umfasst:
- einen Abscherstift (402), der von der Hinterseite (232) der Befestigungsplatte (212) in die zentrale Bohrung (214b) und die entsprechende komplementäre zentrale Bohrung (224) eingeführt wird und der einen Bund (404) aufweist, der an der Hinterseite (232) der Befestigungsplatte (212) anliegt,
- ein Stützelement (308) mit einer zentralen Öffnung (310), deren Durchmesser größer als der Durchmesser des Bundes (404) ist, das an der Hinterseite (232) der Befestigungsplatte (212) befestigt ist, um die zentrale Öffnung (310) und die zentrale Bohrung (214b) auszurichten, und
- eine Kappe (406), die an dem Stützelement (308) befestigt ist und die die zentrale Öffnung (310) abdichtet und an dem Abscherstift (402) anliegt.

2. Einheit (200) nach Anspruch 1, **dadurch gekennzeichnet, dass** die Befestigungsplatte (212) zwischen der Vorderseite (230) und der Hinterseite (232) von mindestens einer peripheren Bohrung (216a-d) durchquert wird, dass der Träger (204) für jede periphere Bohrung (216a-d) eine komplementäre periphere Bohrung (226a-b), die zu der peripheren Bohrung (216a-d) ausgerichtet ist, und eine Mutter (228a-b), die im Bereich der komplementären peripheren Bohrung (226a-b) befestigt ist, aufweist, und dass das Befestigungssystem (300) für jede periphere Bohrung (216a-d) einen Zugbolzen (502) umfasst, der von der Hinterseite (232) der Befestigungsplatte (212) in die Mutter (228a-b) geschraubt wird und dabei die periphere Bohrung (216a-d) und die komplementäre periphere Bohrung (226a-b) durchquert.

3. Einheit (200) nach Anspruch 2, **dadurch gekennzeichnet, dass** der Kopf jedes Zugbolzens (502) eine Form (510) aufweist, dass die Einheit (200) ein Drehsicherungssystem (500) umfasst, das Folgendes umfasst:
- eine Befestigungsplatte (504), die zwischen der Hinterseite (232) der Befestigungsplatte (212) und dem Stützelement (308) befestigt ist, die ein zu der zentralen Bohrung (214b) ausgerichtetes Fenster (504), dessen Durchmesser größer als der Durchmesser des Bundes (404) des Abscherstifts (402) ist, aufweist und die einen Flügel (506), der mit einer Verriegelungsöffnung (508) versehen ist, aufweist,
- eine Verriegelungsplatte (512), die Folgendes aufweist: eine Gegenform, wobei die Form (510) und die Gegenform zusammenwirken, um das Drehen der Verriegelungsplatte (512) um die Achse des Zugbolzens (502) zu verriegeln, und ein zu der Verriegelungsöffnung (508) ausgerichtetes Verriegelungsfenster (514), und
- einen Stift, der in dem Verriegelungsfenster (514) und der Verriegelungsöffnung (508) befestigt wird.

4. Motorisierungseinheit eines Luftfahrzeugs (10), die einen Motor (150) und eine Einheit (100) nach einem der vorhergehenden Ansprüche umfasst.

5. Luftfahrzeug (10), das mindestens eine Motorisierungseinheit nach dem vorhergehenden Anspruch umfasst.

## Claims

1. Assembly (200) for an aircraft (10) and comprising:
- a pylon (102) having a mounting plate (212) having a front face (230) and a rear face (232) and through which there passes, between the front face (230) and the rear face (232), at least one central bore (214a-b),
- a front engine mount (202) comprising a spar (204) which has a rear face bearing against the front face (230) of the mounting plate (212) and which, for each central bore (214a-b), has a complementary central bore (224) aligned with the said central bore (214a-b), and
the assembly (200) being **characterized in that**, for each central bore (214a-b), the said assembly (200) comprises a mounting system (300) which comprises:
- a shear pin (402) which is inserted into the central bore (214b) and the corresponding complementary central bore (224) from the rear face (232) of the mounting plate (212) and which has a flange (404) bearing against the rear face (232) of the mounting plate (212),
- a support (308) with a central hole (310) the diameter of which is greater than the diameter of the flange (404) and fixed to the rear face (232) of the mounting plate (212) so as to align the central hole (310) and the central bore (214b), and
- a cap (406) fixed to the support (308) closing off the central hole (310) and bearing against the shear pin (402) .

2. Assembly (200) according to Claim 1, **characterized in that** the mounting plate (212) has passing through it, between the front face (230) and the rear face (232), at least one peripheral bore (216a-d), **in that**, for each peripheral bore (216a-d), the spar (204) has a complementary peripheral bore (226a-b) aligned with the said peripheral bore (216a-d) and a nut (228a-b) fixed in the region of the complementary peripheral bore (226a-b), and **in that** the mounting system (300) comprises, for each peripheral bore (216a-d), a tension bolt (502) which screws into the nut (228a-b) from the rear face (232) of the mounting plate (212) by passing through the peripheral bore (216a-d) and the complementary peripheral bore (226a-b).

3. Assembly (200) according to Claim 2, **characterized in that** the head of each tension bolt (502) has a distinctive shape (510), and **in that** the said assembly (200) comprises a rotation proofing system (500) which comprises:
- a mounting plate (504) fixed between the rear face (232) of the mounting plate (212) and the support (308), having an opening (504) aligned with the central bore (214b) and the diameter of which is greater than the diameter of the flange (404) of the shear pin (402) and which has a wing (506) pierced with a locking hole (508),
- a locking plate (512) having a distinctive counter shape, where the distinctive shape (510) and the distinctive counter shape collaborate to lock the locking plate (512) against rotation about the axis of the tension bolt (502) and a locking opening (514) aligned with the locking hole (508), and
- a pin which fits into the locking opening (514) and the locking hole (508).

4. Propulsion assembly for an aircraft (10) comprising an engine (150) and an assembly (100) according to one of the preceding claims.

5. Aircraft (10) comprising at least one propulsion assembly according to the preceding claim.
